# EUROPEAN PATENT SPECIFICATION

(11) **EP 4 251 464 B1**
(45) Date of publication and mention of the grant of the patent: **25.09.2024**
(21) Application number: 21819757.2
(22) Date of filing: 23.11.2021
(51) Int. Cl.: B60L 53/62, B60L 53/66

(54) **METHOD AND SYSTEM FOR ADAPTIVELY CHARGING OF ELECTRIC VEHICLES**
VERFAHREN UND SYSTEM ZUM ADAPTIVEN LADEN VON ELEKTROFAHRZEUGEN
PROCÉDÉ ET SYSTÈME DE RECHARGE ADAPTATIF POUR VÉHICULES ÉLECTRIQUES

(30) Priority: 24.11.2020 EP 20209616
(43) Date of publication of application: 04.10.2023
(73) Proprietor: VITO NV, 2400 Mol (BE); Katholieke Universiteit Leuven, 3000 Leuven (BE)
(72) Inventor: CARDINAELS, Wim, 2400 Mol (BE); DE CRAEMER, Klaas, 2400 Mol (BE); THOELEN, Klaas, 3600 Genk (BE)
(74) Representative: Nederlandsch Octrooibureau
(86) International application number: PCT/EP2021/082635
(87) International publication number: WO 2022/112226

(56) References cited:
- US-A1- 2012 245 750
- US-A1- 2019 217 739

## Description

### Field of the Invention

The present invention relates to a method for managing distribution of energy flow to at least one charging point, to charge an electric-vehicle battery (EVB) of at least one parked electric vehicle (EV) electrically connected to a respective charging point circuitry in the at least one charging point. The present invention further relates to a system for managing distribution of energy flow to charge an EVB. Furthermore, the present invention relates to a non-transient computer readable medium containing program instructions for causing a computer for managing distribution of energy flow to charge an EVB.

### Background

Currently, vehicles do not yet communicate free battery capacity with charging points. Also unknown is the user/driver's desired state of charge (SoC) at departure time. Furthermore, the departure time is not known. Therefore, applications have been recently provided to allow the user/driver to communicate these values to the charging point operator. However, it has been shown that this functionality is rarely used because it requires that the user executes successive actions on different systems. It has been also shown that it is difficult for users to adopt a new behaviour that requires successive actions on different systems. Rather it is much easier for the user/driver to adopt new habits that do not require consultation of different systems.

Furthermore, current methods for charging a battery for a vehicle mainly focus on a local power constraint and divide the available power over the connected vehicles. This applies some 'fairness' depending on an agreed service level, available power and time, and request for priority charging. The dominant commercial charging strategy is to have batteries charged as soon as possible to create free charging capacity for possible additional vehicles in the near future. However, this often results in a fully charged battery earlier than the departure time of the vehicle. For example, at an office building, batteries would be fully charged by noon, a long time before employees leave the office, resulting in connected, but idle charging points.

Hortop et al. (US 2019/0039467 A1) describes approaches for charging a battery for an electric vehicle, which involve obtaining battery usage metrics of the battery of the electric vehicle based upon past usage of the battery and past charging of the battery. The metrics are analysed to determine a target state of charge (SoC) for a first type of vehicle usage and determine a charging scheme as a function of time to achieve the target SoC at a first predetermined time. The charging scheme includes a first time period and a subsequent second time period, wherein an average rate of delivering charge to the battery during the second time period is greater than an average rate of delivering charge to the battery during the first time period. The battery is charged according to the charging scheme until the battery reaches the target SoC, which is less than a maximum state of charge for the battery.

In US2019217739A1 a building optimization system which includes charging and discharging a battery of a battery power vehicle is disclosed. The building optimization system includes a charging system configured to cause the battery of the battery powered vehicle to charge or discharge. The building optimization system also includes an optimization controller including a processing circuit. The processing circuit is configured to receive charging constraints for the battery powered vehicle, determine whether to charge discharge the battery of the battery powered vehicle based on the charging constraints, and cause the charging system to charge or discharge the battery of the battery powered vehicle based on the optimization.

In US2012245750A1 a charging prediction database is disclosed that stores information on electric vehicles expected to arrive for charging. A profile/charging information database stores information on electric vehicles that have arrived and been waiting for charging. A power database stores information on a power source including at least one of a power grid and a stationary battery. An energy calculating unit calculates energy available from the power source based on the power database. A scheduling unit schedule charging of the electric vehicles waiting for charging in consideration of the electric vehicles expected to arrive.

It has been found that despite efforts to determine a target SoC of a battery in order to optimize a battery performance of an electric vehicle, there is still a need to improve the management of energy flow at one or more charging points. Moreover, there is a need to reduce the user/driver's input and effectively charge the battery when there is no to minimal input from the user/driver.

### Object of the Invention

An object of the invention is to provide flexibility in power level and time of charging a parked electric-vehicle battery of an electric vehicle.

Another object of the invention is to provide an improved estimate or determination of at least one of a free battery capacity or SoC and a total battery capacity for charging a parked electric-vehicle battery of an electric vehicle.

Another object of the invention is to provide an improved estimate or determination of a departure time and/or parking duration of an electric vehicle.

Another object of the invention is to provide a more efficient management of charging point operation for charging of an electric-vehicle battery of at least one parked electric vehicle.

Another object of the invention is to provide a more effective management of charging point operation for charging of an electric-vehicle battery of at least one parked electric vehicle, while reducing a user/driver's input.

Additional and alternative objects of the disclosure may be understood from the following.

### Summary of the Invention

An aspect of the present invention provides a method for managing distribution of energy flow to at least one charging point to charge an electric-vehicle battery, EVB, of at least one parked electric vehicle, EV, electrically connected to a respective charging point circuitry in the at least one charging point, the method comprising the steps of: determining a first set of flexibility information of the EVB, the first set of flexibility information comprising information on supported power levels for charging the EVB, based on historical charging point data and/or power levels communicated between the EVB and the respective charging point circuitry; determining a second set of flexibility information of the EVB, the second set of flexibility information comprising an initial free battery capacity of the EVB and an expected parking duration of the at least one EV, based on the historical charging point data of the EVB; determining a behavioural change of a user of one of the at least one EV; and determining constraints related to charging the EVB using the respective charging point circuitry based on the determined first and second sets of flexibility information and the determined behavioural change of the user.

By using the flexibility information of the EVB, constraints relating to charging the EVB can be better determined, such as determining an averaged power level for charging the EVB. Furthermore, by using the determined initial free battery capacity and expected parking duration, the constraints can be even better determined, such as determining a desired minimum energy or SoC, a maximum supported energy or SoC, a minimum and a maximum parking duration.

The method further comprises the steps of: determining an initial charging scheme for the EVB of each of the at least one parked EV based on the determined constraints; and controlling the respective charging point circuitry to charge the EVB according to the determined respective charging scheme.

As a result of the improvement in the determining of the constraints, an initial charging scheme for charging the EVB can be better determined. For instance, a plurality of charging schemes can be generated based on at least one of a group of the determined first set of flexibility information and the determined second set of flexibility information. The determined constraints can thus improve the determining of the initial charging scheme from among the generated plurality of charging schemes. For example, the initial charging scheme can be a scheme that includes safety margins to ensure that a minimum SoC of the EVB is attained within a minimum or maximum parking duration.

Note that the term "charging scheme" represents (cumulative) energy charged by the charging point circuitry. The consumed power during a certain period corresponds to the cumulative energy at the end of this period. Furthermore, the charging scheme may be graphically shown as a time series of determined, estimated or predicted power/energy values over an estimated/forecast period.

Furthermore, it is to be noted that the term "electric vehicle (EV)" refers to any one or combination of a plug-in EV (PEV), an all-electric or battery electric vehicle (BEV), a plug-in hybrid vehicle (PHEV) and a new energy vehicle (NEV).

In an embodiment according to the present invention, the constraints may comprise information on an early transfer of accumulated energy in function of time needed and a delayed transfer of accumulated energy allowed by the EVB within the determined parking duration in function of time. The former relates to charging in a shortest period possible at maximum supportable power level, and the latter relates to charging in a longest period possible (e.g., delayed charging).

The determining of the behavioural change may comprise determining a probability of deviation on at least one of the expected parking duration, the initial free battery capacity and a minimal required energy to meet user expectations. Furthermore, the constraints may comprise safety margins. For example, if a likelihood or probability of an earlier departure time is high (e.g., >80 % or >90%) due to a behavioural change of the user (e.g., arriving earlier), then the constraints may comprise a safety margin that takes an earlier departure time into consideration.

In a further embodiment, the determination of the behavioural change may comprise a comparison of present data with historical data.

In an additional or alternative embodiment, the determination of the behavioural change may comprise receiving user input.

Advantageously, the determining of the initial charging scheme may be further improved according to a deviation in behaviour of a user/driver. For example, the user/driver arriving later or earlier than determined or expected, connecting the EV to the charging point later or earlier than determined or expected, leaving/departing later or earlier than determined or expected, using/consuming more or less energy than determined or expected from the EVB of the EV, etc. Therefore, the initial charging scheme may be effectively adapted based on the determined behavioural change of the user/driver or determined based further on said behavioural change.

In embodiments according to the present invention, the method may further comprise the step of estimating energy flow at a power grid connection point located between a public power grid and a local energy grid to which the charging point circuitry is electrically connected , for example via an electrical system of a building or parking/charging facility , based on historical energy flow data measured at the power grid connection point, where the step of determining constraints is further based on the estimated energy flow at the power grid connection point.

It is to be noted that the power grid connection point may be a public power grid connection point. The energy flow at the public power grid connection point refers to amount of energy that will be drawn from (e.g., consumed) or injected into the public power grid (e.g., wide area synchronous grid or interconnection) by a local energy grid (e.g., microgrid, nanogrid, picogrid, milligrid, and minigrid). The local energy grid may be managed by a charging facility. The local energy grid may comprise at least one of a group of: at least one renewable energy source, at least one EV, at least one energy storage unit, etc. Furthermore, the public power grid may be managed by a distribution system operator (DSO) or by a transmission system operator (TSO).

In embodiments according to the present invention, the method may further comprise the step of determining flow at the power grid connection point located between a public power grid and a local energy grid electrically and connected to the charging circuitry, which may be performed in real-time. Furthermore, the initial charging scheme may be adjusted/adapted based on the determined energy flow at the power grid connection point. The step of determining the energy flow at the power grid connection point can provide more effective decision making, for example by comparing the supply of power or energy by the public and/or local power grids with the demand of power or energy by the at least one EVB and/or the charging facility. Furthermore, the resulting determined/adapted initial charging scheme can be used to reduce component loading, balance the load and minimize voltage fluctuations on the public power grid (i.e., DSO) and the local power grid, and minimize frequency fluctuations on the public grid (i.e., TSO), which improves the grid hosting capacity.

Therefore, the dynamic amounts and/or prices of power/energy from different sources can be more effectively used to adapt or determine an optimized charging scheme that is more economical and efficient to a charging provider, e.g. a manager of a charging point facility. For example, it would be more economical to use locally generated power (e.g. from a renewable energy source) at times when the available local power is greater than the total power used on the connection point to the grid, common for the charging points, renewable energy source and other energy systems in the considered facility, thus at times when the facility has a nett grid injection.

In further embodiments, at least one of the steps of estimating and determining the energy flow at the power grid connection point may further comprise the step of estimating an expected production of local power by a renewable energy source electrically connected to the local energy grid to which the charging point circuitry is electrically connected based on weather forecast data. The estimate of the expected production of local power may be further based on historical weather data and historical production data of local power production. Advantageously, the power or energy flow can be more efficiently managed. For example, if it is estimated that the production of local power to be lower/higher than expected consumption, then the charging provider can decide to increase/decrease the demand for power or energy or to purchase more/less.

In embodiments, the step of determining the initial charging scheme for the EVB of each of the at least one parked EV may be further based on predefined power pricing. The predefined power pricing may be obtained in advance from a pricing market, for example a day-ahead, weekly, monthly, quarterly, yearly, multi-year, or a combination thereof. Typical examples are a day-ahead pricing and a standard pricing. The day-ahead pricing is obtained a day-ahead, typically during the afternoon, and may be provided in 1-hour rates based on the day-ahead pricing market. The standard pricing are typically at a fixed rate.

In embodiments, the method may further comprise the step of adjusting the initial charging scheme based on an intraday balancing market and/or reserve market activation (for e.g., activation via reserve market contracts). Additionally or alternatively, the step of adjusting may be based on intraday imbalance settling. In situations where the demand for power or energy during the day has increased/decreased, the deficit/excess of power or energy can be bought/sold on the balancing market and/or reserve market. Therefore, by adjusting the initial charging scheme, the financial costs/rewards can be optimized. For example, if there is a higher demand for power or energy by the at least one EV than nominated (e.g. the contracted power/energy supply), the charging provider can decide to purchase more power or energy from the intraday market based on the price of the energy. In another example, if there is a lower demand for power or energy by the at least one EV than nominated (e.g. the contracted power/energy supply), the charging provider can decide to sell the remaining power or energy in the imbalance market based on the price of the power or energy demand (e.g. by other facilities or power plants).

In embodiments, the method may further comprise the step of estimating a behaviour of the intraday balancing market and/or the reserve market activation or a probability thereof, based on the predefined power pricing and historical imbalance data in the intraday balancing market and/or the reserve market activation. Additionally or alternatively, the step of estimating may be based on incidents in power supply. The historical imbalance data may comprise historical power pricing and volume in the intraday balancing market.

In embodiments, the method may further comprise the step of providing a user interface for receiving user input relating to at least one of a group of an expected departure time, an energy estimate, a vehicle model and an EVB capacity. For example, user information relating to the vehicle model can provide information on the EVB capacity, supported power levels for charging the EVB, average energy consumption per distance (Wh/km), etc. Furthermore, the energy estimate may be a free battery capacity or a minimum energy needed or a next trip after departure. Therefore, the constraints and/or the initial charging scheme can be more effectively determined.

In embodiments, the historical data may be obtained from the charging point, the user-interface and/or a memory unit.

In further embodiments, the method may further comprise the step of adjusting the initial charging scheme based on the received user input. For example, the power level for charging an EVB can be adapted to the type of EVB. In another example, the charging scheme can be adapted to the user's actual or planned departure time. In another example, the actual EVB capacity provided by the user/driver can be used to adapt the constraints and/or the initial charging scheme. Therefore, the charging of the EVB can be more effectively performed.

The present invention therefore has numerous benefits and advantages, such as but not limited to: increasing (local) renewable energy utilization, reducing peak loads, balancing phase loads, avoiding grid overloading issues, avoiding voltage problems, providing grid frequency supporting services, reducing the grid losses, reducing the charging cost and increasing the profits for charging providers.

An aspect of the present invention also provides a system for managing distribution of energy flow to charge an electric-vehicle battery, EVB, of at least one parked electric vehicle, EV, the system comprising: at least one charging point circuitry for charging the EVB of at least one parked EV electrically connected to the at least one respective charging point circuitry; and a processing unit. In embodiments according to the present invention, the processing unit is configured to perform any of the above method steps.

In embodiments, the system may further comprise a user interface for receiving user input relating to at least one of a group of an expected departure time, an energy estimate, a vehicle model, at least one supported power level for charging the EVB, and an EVB capacity.

An aspect of the present invention also provides a non-transient computer readable medium containing program instructions for causing a computer to perform any of the above method steps.

Other aspects, advantages, and salient features of the disclosure will become apparent to those skilled in the art from the following detailed description, which, taken in conjunction with the annexed drawings, discloses various embodiments of the present disclosure.

### Brief description of the drawings

The invention will be explained in more detail below with reference to drawings in which illustrative embodiments thereof are shown. They are intended exclusively for illustrative purposes and not to restrict the inventive concept, which is defined by the appended claims.
Fig. 1 shows a schematic drawing of a system for managing distribution of energy flow to charge an electric-vehicle battery, EVB, of at least one parked electric vehicle, EV according to the present invention;
Fig. 2 shows a schematic drawing of a flow chart of a method for managing distribution of energy flow to charge an electric-vehicle battery, EVB, of at least one parked electric vehicle, EV according to the present invention;
Figs. 3a-3d each show a schematic drawing of charging schemes for an EVB of a parked EV;
Figs. 4a shows a graphical drawing of an overview of locally produced power, price of power and consumed power by the EVB of at least one parked EV;
Fig. 4b shows a graphical drawing of flexibility information of an EVB and a charging scheme determined for the EVB;
Fig. 5 shows a graphical drawing of an overview of daily power consumption and production;
Figs. 6a-6d each show a schematic drawing of a user interface according to the present invention; and
Fig. 7 shows a graphical drawing of an overview of locally produced power, price of power, consumed power by the EVB of at least one parked EV and a grid capacity.

### Detailed description of the drawings

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the disclosure may be implemented rather than as limiting the scope of the disclosure.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present disclosure, the only enumerated components of the device are A and B, and further the claim should be interpreted as including equivalents of those components.

Different aspects of the present disclosure will be described more fully hereinafter with reference to the enclosed drawings. The embodiments disclosed herein can, however, be realized in many different forms and should not be construed as being limited to the aspects set forth herein.

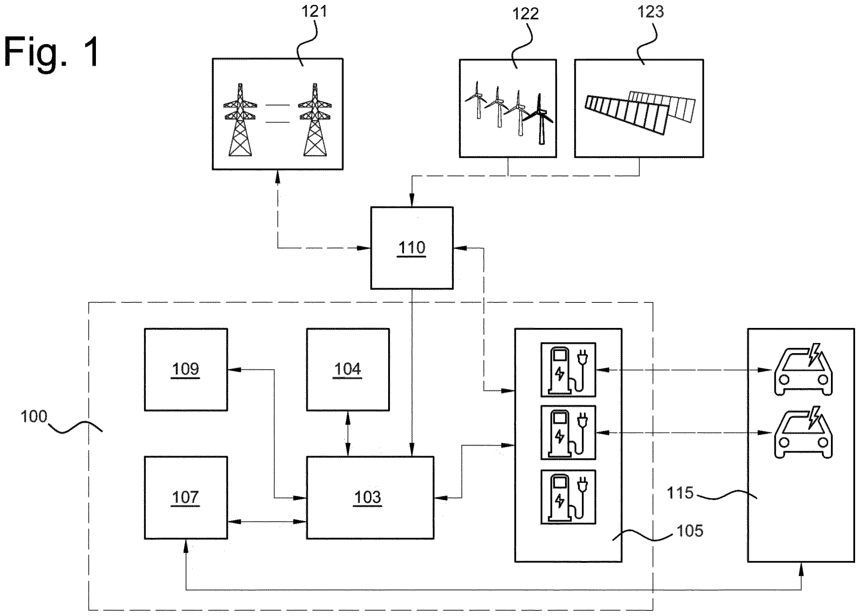

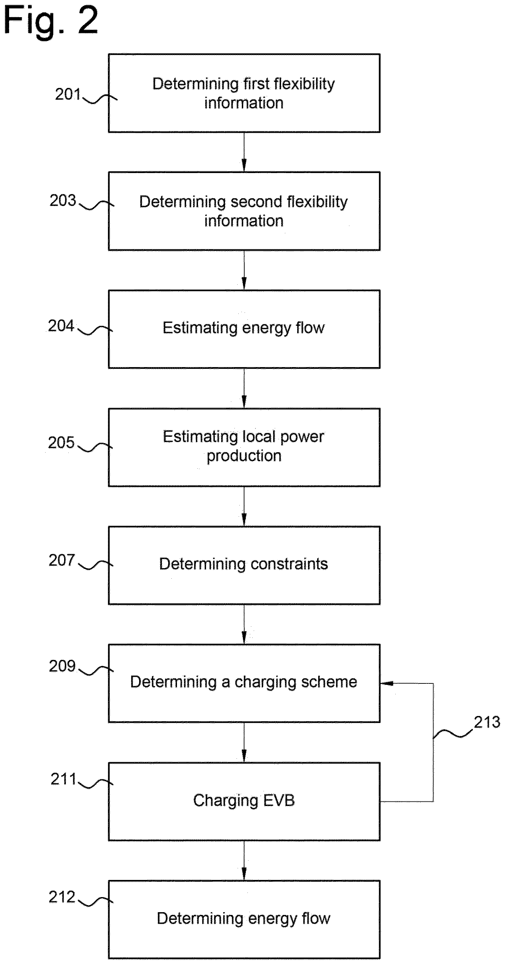

Embodiments of a system and a method according to the present invention will be described with reference to Figs. 1 and 2, respectively. Fig. 1 shows a schematic drawing of a system 100 for managing distribution of energy flow to charge an electric-vehicle battery (EVB) of at least one parked electric vehicle (EV) 115 according to the present invention. The system comprises at least one charging point circuitry 105 and a processing unit 103.

The system 100 may comprise at least one charging point, each of which comprises at least one charging point circuitry 105. For example, a charging point may have multiple connectors for electrically connecting EVs.

As shown in Fig. 1, each of the at least one parked EV 115 is electrically connected to a respective charging point circuitry from among the at least one charging point circuitry 105. The at least one charging point circuitry 105 is provided for charging the EVB of at least one parked EV 105 electrically connected to the at least one respective charging point circuitry 105. In Fig. 1, there is shown two EVs 115 electrically connected to two of the three charging point circuitry 105. The present invention is not limited to the number of at least one EV 115 or charging point circuitry 105.

The processing unit 103, shown in Fig. 1, is electrically and/or communicatively connected to the at least one charging point circuitry 105. The processing unit 103 is configured to operate or control the at least one charging point circuitry 105, particularly the at least one respective charging point circuitry 105 to which the EVB of the at least one parked EV 105 is electrically connected, for charging the EVB. This will be described in more detail below.

The processing unit 103 is configured to perform the step of determining 201 a first set of flexibility information of the EVB comprising information on supported power levels for charging the EVB. For example, a minimal and maximal level of power intake supported by the EVB). The first set of flexibility information may further comprise other levels of power intake supported by the EVB in between the minimal and maximal levels. The first set of flexibility information may be stored in the at least one EV 115 and/or in the memory unit 104 and gathered therefrom by the processing unit 103. This allows that upon connection of the at least one EV 115 to the respective at least one charging point circuitry 105, the processing unit 103 can update the first set of flexibility information of the at least one EV 115 in the memory unit 104 depending on the first set of flexibility information of the at least one EV 115. Alternatively or additionally, the first set of flexibility information may be obtained by monitoring use of power in function of time of the at least one parked EV 115. This allows the processing unit 103 to determine the first set of flexibility information of the at least one parked EV 115 without said parked EV 115 having to store the first set of flexibility information itself such that, for example, EVs not being adapted to communicate with the processing unit 103 or the system 100 can operate with the method according to the present invention. Therefore, the first set of flexibility information is determined based on the historical charging point data and/or power levels communicated between the EVB and the respective charging point circuitry.

The processing unit 103 is configured to perform the step of determining 203 a second set of flexibility information. The step of determining 203 may comprise estimating the second set of flexibility information. The step of determining 203 thus comprises determining or estimating an initial free battery capacity of the EVB and an expected parking duration of the at least one parked EV 115 based on historical data comprising historical charging point data relating to the use or operation of the charging point circuitry for charging the EVB. Examples of historical charging point data may comprise: historical battery charge usage, historical charging amounts (power and energy) as a function of time, historical charging locations (i.e., the specific charging point circuitry to which the EV has been connected), historical arrival and departure times, etc., or any combination thereof.

The processing unit 103 may receive said historical charging point data from the at least one charging point circuitry 105, particularly the at least one charging point circuitry 105 to which the at least one respective parked EV 105 is electrically connected. As shown in Fig. 1, the system 100 may further comprise a memory unit 104. The processing unit 103 may thus alternatively receive said historical charging point circuitry data from the memory unit 104 comprised in the system 100. The historical data may further comprise historical weather data. The processing unit 103 may receive said historical weather data from an external unit, such as a historical weather database, from the memory unit 104, etc. In one example, on a cold day (e.g., less than 15 degrees Celsius, less than 10 degrees Celsius, less than 0 degrees Celsius, etc.), the processing unit 103 may determine or estimate the energy consumption per distance to be larger, thus also the free battery capacity to be larger than on other (average) days, such as due to increased use of battery electricity for heating the interior of the vehicle.

The free battery capacity refers to the battery capacity that can be charged. In other words, free battery capacity = total battery capacity x (1-SoC). The processing unit 103 may determine or estimate a total battery capacity and a state of charge (SoC) of the EVB based on the above described historical data. Therefore, the free battery capacity can be determined or estimated from the determined or estimated total battery capacity and SoC.

Furthermore, the parking duration refers to a duration of a parked EV 115 being electrically connected to a relevant charging point circuitry 105. In other words, parking duration = departure time - arrival time. Alternatively, the processing unit 103 may determine or estimate the departure time of the EV based on the above described historical data. Therefore, the parking duration can be determined or estimated from the determined or estimated departure time (e.g., time of electrically disconnecting the EV) and the actual arrival time (i.e., time of electrically connecting the EV).

The determining 201, particularly the step of estimating comprised therein, of the initial free battery capacity of the EVB and the parking duration of the EV may be performed by using any one of a (multiple) linear regression model, a classification and regression tree (CART), gradient boosting decision tree (GBDT), deep learning algorithms (e.g. artificial, convolutional or recurrent neural network, ...), support vector machine (SVM), etc. Thus, a model may be first trained on the historical data, and the model may be used to predict the initial free battery capacity of the EVB and the parking duration of the EV, given an input, for example, time and day of a week, month or year and user information. The model may be reinforced with ant new information obtained or collected from the charging point and/or user interface.

In embodiments, the processing unit 103 may be communicatively connected to a metering unit 110 configured to measure at a public power grid connection point at least one of grid injection, and grid consumption. Thus processing unit 103 may monitor peak power use from the public power grid. The monitoring of peak power use may comprise calculating an average of a 15-minute period. Thus, evaluation of initial minutes leaves time to decrease/increase power for a remaining time (for e.g., remaining time in the 15-minute period) to optimize energy flows within the targeted capacity constraint.

The public power grid connection point may be located between the public power grid 121 and the local energy grid. The metering unit 110 may be comprised in the system 100, DSO, TSO or an external service provider. Grid injection may be vehicle-to-grid (V2G) injection (e.g. via the charging point circuitry), from the local (renewable) energy source, from an energy storage unit (e.g., local static batteries), etc. The grid consumption may be the use of energy in the local energy grid (e.g., charging the at least one EVB, charging local batteries, facility consumption, etc.).

This metering unit 110 can receive scheduled capacity constraints and actual energy metrics including currents per phase, voltages, power, etc. from metering devices measuring at the grid connection, local renewable energy source connection, Combined Heat and Power (CHP) generating system connection, local static battery connections, Heat Pump (HP), used for heating or cooling connections, and connections to other relevant systems impacting the local energy grid management of the facilities controlled by system 100.

The processing unit 103 may perform the step of estimating 204 energy flow at the power grid connection point, based on historical energy flow data measured at the power grid connection point by the metering unit 110. The processing unit 103 may obtain said historical energy flow data form the memory unit 104.

In embodiments, the processing unit 103 may be configured to perform the step of estimating 205 an expected production/generation of local power or energy by a local energy source in the local energy grid electrically connected to the charging point circuitry. For example, power production of a renewable energy source can be estimated based on geographical location (e.g., latitude, longitude and elevation) and/or technical details of the renewable energy source. The renewable energy source may comprise a wind energy source 122 (e.g. wind turbine) and/or a photovoltaic (PV) energy source 123 (e.g. solar panel). This means that the position of, for example, the wind and/or PV energy source 122, 123 affects how much wind energy and/or solar radiation may be collected at the ground. The geographical location and/or technical details of the renewable energy source 122, 123 may be obtained from the renewable energy source 122, 123, for example through a communication unit 109 comprised in the system 100, but is not limited thereto, or may be obtained from the memory unit 104. Additionally or alternatively, the processing unit 103 may estimate the production/generation of local power or energy based on weather forecast data. Weather conditions, such as rain, snow, cloud, and the density of air can affect how much wind energy and/or solar radiation may be collected at the ground. Furthermore, the efficiency of the PV energy source, the rotation speed of the wind energy source and/or other technical details may affect the amount of solar radiation and/or wind energy collected. Thus, the processing unit 103 may estimate the expected production of local power or energy based on external factors, such as weather conditions (e.g, temperature, atmospheric density, barometric pressure, humidity, precipitation, solar radiation, wind, etc.), geographical location, technical details of the at least one renewable energy source (e.g. design, size, peak power generation, etc.), and/or other factors known in the art.

In alternative embodiments, the processing unit 103 may receive expected power production/generation data or an estimation thereof from an external provider, such as a power grid system operator like Elia in Belgium, the European Network of Transmission System Operators for Electricity (ENTSO-E) or other operators/platforms that provide expected power production/generation data or an estimation thereof. Said power production/generation data is a representation of the power that theoretically should be generated by means of said renewable energy source 122, 123 based on said external factors. Said expected power or energy production/generation data or an estimation thereof may be received, for example, through the communications unit 109 comprised in the system, but is not necessarily limited thereto.

The processing unit 103 is configured to perform the step of determining 207 constraints relating to charging the EVB using the respective charging point circuitry 105 based on the flexibility information, particularly based on the determined or estimated free battery capacity, the supported power levels and the estimated parking duration. The processing unit 103 may determine the constraints based further on the estimated energy flow at the power grid connection point. Additionally, the processing unit 103 may determine the constraints based further on the estimated expected production of local power or energy. The constraints can be for example availability of power or energy capacity, price of the power or energy, the availability possibly being reflected in the price of the power or energy, the maximum amount of energy which can flow over a certain connection from the at least one EV over the different connections to the supply source of this energy (e.g. for electrical energy taking the fuse values to avoid an overcurrent into account), a maximal power which can be delivered to the EVB of the at least one EV (for e.g. if the flow of energy is delivered to the EVB of the at least one EV by means of an electrical transformer), a desired minimum energy or desired minimum SoC, a maximum supported energy capacity or maximum SoC, a minimum and a maximum parking duration, whether three phase charging is supported by the EVB, supported power levels for charging, etc.

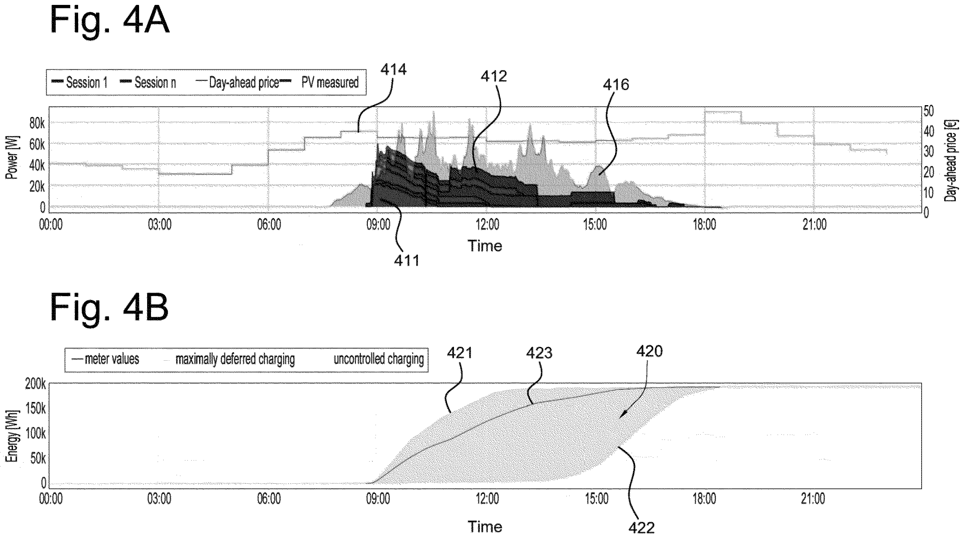

The processing unit 103 is configured to perform the step of determining 209 an initial charging scheme for the EVB of each of the at least one parked EV based on the determined constraints. The processing unit 103 may generate a plurality of charging schemes for the EVB of each of the at least one parked EV and determine an optimal charging scheme from among the plurality of generated charging schemes. The generated charging schemes may be constrained between the early and delayed charging schemes to charge an EVB to a predetermined target SoC (e.g., fully charged, at least 90%, at least 80%, etc.) within at the latest the parking period of the EV. An example of constraints and a charging scheme will be described in more detail below with reference to Fig. 4b.

The processing unit 103 may determine the initial charging scheme by solving a (constrained) optimization problem that minimizes or maximizes one or more objective functions that, for example, minimize the charging cost, maximize the use of renewable power for charging the EVB, minimize load variance, minimize the use of grid power or charging the EVB, etc. Other problems that can be solved by the optimization problem can be understood from the present invention. Parameters in the objective function and/or the constraints may comprise any one or combination of available power or energy (e.g., grid and/or local sources), power or energy load/demand, power or energy cost, a number of the at least one EV, flexibility information (e.g., determined or estimated free battery capacity SoC, total capacity, maximum/minimum charging/discharging rates, supportable power levels, arrival/departure times, etc), etc.. The optimization problem may be any one of linear programming (LP), mixed-integer linear programming (MILP), non-linear programming (NLP), quadratic programming (QP), dynamic programming (DP), stochastic programming (SP), robust optimization (RO), genetic algorithm (GA), imperialist competitive algorithm (ICA), ant colony optimization (ACO), etc.

The processing unit 103 may be configured to first apply a learning charging scheme, when historical data is not available, for example when the user/driver and/or the EV is new. Here, the processing unit 103 gathers historical data, described above, and flexibility information of the EVB of the new EV. The processing unit 103 may be configured to determine a charging scheme including safety margins, when historical data is limited, for example when the user/driver does not often connect the EV to the charging point circuitry 105. Here, the parking period and/or the free battery capacity may not be very well estimated, thus, the processing unit 103 would ensure that the EVB is charged a sufficient amount of energy within a reasonable amount of time, such that the EVB would have for example at least 75% SoC at the latest 3 hours before estimated departure time. Other examples can become apparent to those skilled in the art.

The system 100 may further comprise a user interface 107 configured to receive user input relating to at least one of a group of an expected departure time, an energy estimate, a vehicle model and an EVB capacity. The user interface 107 will be described in more detail herein.

The processing unit 103 may be configured to determine the initial charging scheme further based on at least one of: the estimated energy flow at the power grid connection point, the estimated expected production of local power in the local power grid, a predefined power pricing and the user input as described herein.

The processing unit 103 is configured to perform the step of controlling 211 the at least one respective charging point circuitry to which the at least one EV is electrically connected to charge the EVB according to the determined respective charging scheme.

In embodiments, the processing unit 103 may perform a step of determining 212 energy flow at the power grid connection point located between the public power grid and the local energy grid to which the charging point circuitry is electrically connected. The energy flow may be determined in real-time (for e.g., every one or more seconds, one or more minutes, etc.), such as based on present data of injected energy, consumed energy, peak power monitoring, etc. The processing unit 103 may perform the step of determining 212 via the metering unit 110. This will be explained in more detail below with reference to Figs. 4a and 4b.

The processing unit 103 may then perform the step of adjusting 213 the initial charging scheme based on the determined energy flow at the power grid connection point (e.g., at the public power grid connection point). For example, the processing unit 103 determines a power used on the connection point to the grid, common for the charging points, renewable energy source and other energy systems in the local energy grid or considered facility, thus at times when the local energy grid (e.g. facility) has a nett grid injection for a certain period the processing unit 103 may adjust the initial charging scheme to increase the use of the renewable energy source 122, 123 or use the power or energy produced by the renewable energy source 122, 123 for said period.

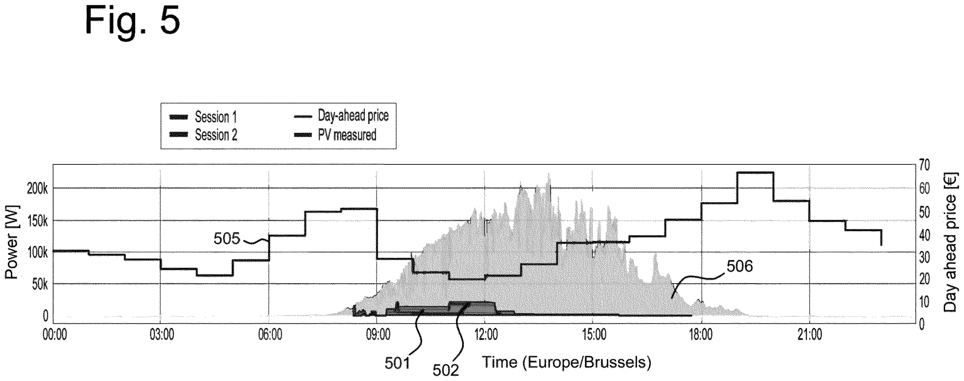

The processing unit 103 may adjust the initial charging scheme based further on an estimated demand/use for power or energy in the initial charging scheme. For example, the processing unit 103 estimates a power used on the connection point to the grid, common for the charging points, renewable energy source and other energy systems in the considered facility, and estimates a period when the local energy grid (e.g. facility) may have a nett grid injection for a certain period the processing unit 103 may adjust the initial charging scheme to increase the use of the renewable energy source 122, 123 or use the power or energy produced by the renewable energy source 122, 123 for said period. A further example will be provided below with reference to Fig. 5.

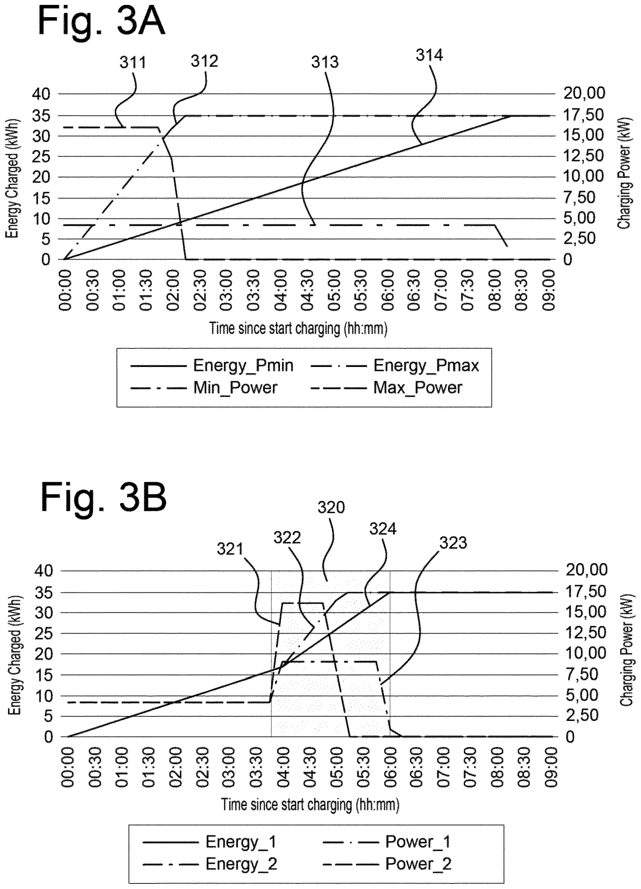

Several scenarios of charging an EVB will be described with reference to Figs. 3a-3d. Fig. 3a shows energy transfer (in kWh) from charging point circuitry 105 to the EVB of an EV 115 in function of time (in hours and minutes since start of charging) as lines or curves 312, 314, and shows applied power level (in kW) by the charging point circuitry 105 to the EVB of the EV 115 in function of time (in hours and minutes since start of charging) as lines or curves 311, 313. In this example, the parking duration is 9 hours, the free battery capacity is 35 kW, and the supported power levels are 4,2 kW and 16 kW. The parking duration and the free battery capacity may be estimated as disclosed above, and the supported power levels may be determined or estimated as described herein. As shown in Fig. 3a, a maximum applied power curve 311 is the curve where the EVB is charged at a maximum power level of 16 kW. Here, the EVB reaches a fully charged states in less than 2,5 hours as shown in the respective energy curve 312. A minimum power level curve 313 is the curve where the EVB is charged at a minimum power level of 4,2 kW. Here, the EVB reaches a fully charged state in around 8 hours as shown in the respective energy curve 314. In both cases the charging point circuitry is occupied for 9 hours, however, when charged at maximum power level of 16 kW, the charging point circuitry is idle for more than 6 hours. In this example, the determined charging scheme may be energy curve 314 and the applied power level curve 313 may be applied by the charging point circuitry 105 to the EVB according to the determined charging scheme.

The processing unit 103 may determine from the EV and/or the respective charging point comprising the circuitry, to which the EV is electrically connected, at least one supportable power level common between the EV and the charging point circuitry. The processing unit 103 may determine an initial communicated maximum power level, and charging may then start at said common maximum power level. The EV may comprise an inverter which can lower the maximum power level during the charging. This is often done in function of SoC to improve battery life. This invertor may support multiple power levels depending on the cartype/model. The charging point circuitry may modify the initial communicated maximum power level by communicating an adapted maximum value to the EVB. As a response, the inverter of the EVB or EV would apply a power level that complies with this adapted maximum power limit, for example by applying the power communicated by the charging point circuitry. If the inverter would activate a higher power level than the power level indicated by the charging point circuitry, the charging point circuitry may interrupt the charging session to avoid damage to the charging circuitry or to avoid blowing a safety fuse in the local energy grid.

The charging point circuitry 105 may be connected to the processing unit 103 that can decide to communicate an adapted power level from the charging point circuitry to the EVB and/or modify the allowed power level during the charging session or in the charging scheme. This concept is typically used if multiple charging points are connected to a limited power supply, where the available power is divided among the parked EVs, for example for dynamic load balancing. Therefore, the processing unit 103 may determine the supported power levels based on the historical charging point data of the EVB. The historical charging point data may further comprise one or more power levels at which the charging point circuitry has charged the EVB.

In general, current charging schemes mainly focus on a power constraint and divide the available power among the connected EVs, to apply some 'fairness' depending on an agreed service level, an available power and an available time. However, at office buildings for example, this often results in a fully charged EVBs at noon, which is a long time before employees leave the office, resulting in connected, but idle charging points. This is shown in Fig. 3a as described above. The determined charging scheme according to the present invention can allow optimal use of the power, for example, such that more EVB can be charged simultaneously or to keep free battery capacity available for use of local generated energy in the afternoon.

Fig. 3b shows energy transfer (in kWh) from charging point circuitry 105 to the EVB of an EV 115 in function of time (in hours and minutes since start of charging) as curves or lines 322, 324, and shows applied power level (in kW) by the charging point circuitry 105 to the EVB of the EV 115 in function of time (in hours and minutes since start of charging) as curves or lines 321, 323. In this example, the departure time or parking period is known or estimated to be at 09:00. Furthermore, the power pricing is predefined (for e.g., day-ahead), where there is a low-price period between time 4:00 and 6:00, shown as a shaded area 320, which may be known or determined. It is desired to charge the most energy during this low-price period in order to benefit from the low price and reduce costs. An example of a low-price period is an off-peak period. One possible charging strategy is to start charging at a minimum/lowest or at a low power (e.g., below 5 kW in Fig. 3b), and switch to a calculated or determined power at the start of the low-price period as shown in the applied power level curve 323. Another possible charging strategy is to start charging at the minimum/lowest or at the low power level, and switch to a maximum power level at the start of the low-price period as shown in the applied power level curve 321. Deciding on an optimal charging strategy can create financial optimizations during periods where energy need for charging is low related to the available power connection. In this example, the charging scheme or energy curve 324 relating to the applied power level curve 323 reaches total battery capacity of 35 kWh at a time of around 6:00, which is later than the time of around 5:15 for the charging scheme or energy curve 322 relating to the applied power level curve 321. Therefore, during the low-price period, more power is available to be applied to other EVBs. The processing unit 103 may thus determine an initial charging scheme that allows optimal use of the power, for example, more EVB can be charged simultaneously. In this example, the determined charging scheme may be energy curve 324 and the applied power level curve 323 may be applied by the charging point circuitry 105 to the EVB according to the determined charging scheme. Note that the determined charging scheme based on the determined constraints as described herein may be different than the charging scheme or energy curve 324 relating to the applied power level curve 323 shown in Fig. 2b. For example, the determined charging scheme may provide a fully charged EVB later than 6:00, by for example delaying the charging (e.g., not charging the EVB) until the start of the low-price period.

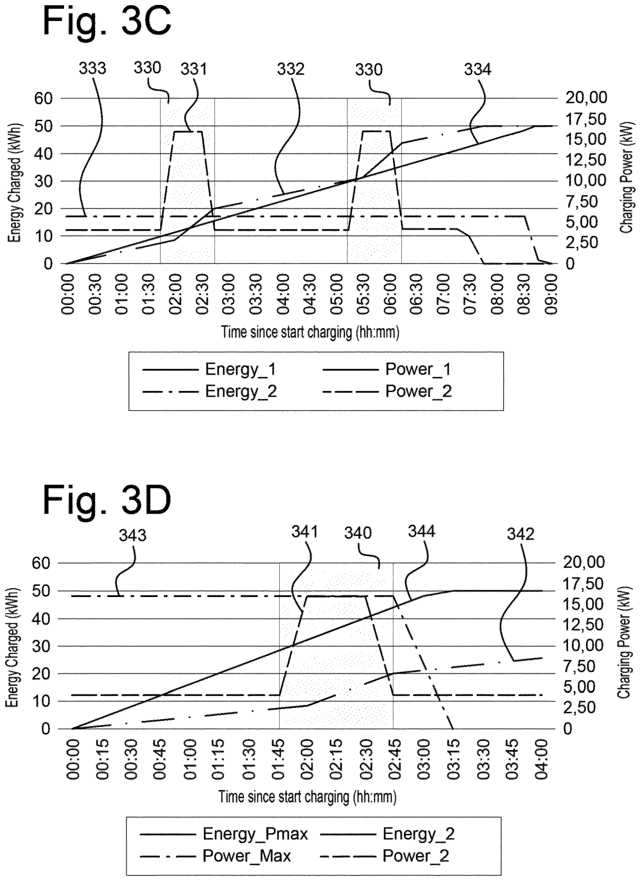

Fig. 3c shows energy transfer (in kWh) from charging point circuitry 105 to the EVB of an EV 115 in function of time (in hours and minutes since start of charging) as curves or lines 332, 334, and shows applied power level (in kW) by the charging point circuitry 105 to the EVB of the EV 115 in function of time (in hours and minutes since start of charging) as curves or lines 331, 333. This example shows the predefined power pricing (for e.g., day-ahead), where low-price periods between around 2:00-3:00 p.m. and between around 5:00-6:00 p.m., shown as shaded areas 330. In this example, an average charging level is illustrated in the applied power level curve 333, where the applied power level is kept constant. Said average charging level may be determined based on the supportable power levels of the EVB as a mean of said power levels. Furthermore, another applied power level curve 331 is shown, where the power level is set to a minimum during periods outside the low-price periods, and is increased during the low-price periods to a higher or maximum power level. A charging scheme or energy curve 334 relating to the applied power level curve 333 reaches total battery capacity of 50 kWh at a time of around 8:30, which is later than the time of around 7:30 for the charging scheme or energy curve 332 relating to the applied power level curve 331. However, the charging scheme or energy curve 332 relating to the applied power level curve 331 resulted in a reduced cost of charging due to the use of increased or maximum power during the low-price periods. In this example, the determined charging scheme may be any one of energy curves 322, 324 and the applied power level curve 321, 323 may be applied by the charging point circuitry 105 to the EVB according to the determined charging scheme. Thus, the processing unit 103 may determine the charging scheme based on the constraints relating to, for example, a minimum charging cost and a minimum SoC of the EVB no later than the determined or estimated departure time or parking period.

Fig. 3d shows energy transfer (in kWh) from charging point circuitry 105 to the EVB of an EV 115 in function of time (in hours and minutes since start of charging) as curves or lines 342, 344, and shows applied power level (in kW) by the charging point circuitry 105 to the EVB of the EV 115 in function of time (in hours and minutes since start of charging) as curves or lines 341, 343. This example is similar to the example of Fig. 3b, where a low-price period is known or determined to be between around 2:00-3:00 p.m. and between around 5:00-6:00 p.m., shown as shaded areas 340. However, the departure time or parking duration is unknown or not determined/estimated. Therefore, a strategy for cost optimization, by waiting for a low-price period in orderto set the power level to an increased or maximum level, can be difficult to achieve. One possible charging strategy is to charge at a maximum power level constantly until the EVB is fully charged, as shown in the applied power level curve 343. Another possible charging strategy is to start charging at minimum/lowest power and switch to a maximum power level at the start of the low-price period, as shown in the applied power level curve 341. Here, it is difficult to decide on an optimal charging strategy that can create financial optimizations during periods where energy need for charging is low related to the available power connection and at the same time ensure that the EVB is charged to a minimum desired SoC or is fully charged. In this example, the charging scheme or energy curve 342 relating to the applied power level curve 341 reaches total battery capacity of around 25 kWh at a time of around 4:00, which is lower than (around half of) the total battery capacity of 50 kWh reached the charging scheme or energy curve 344 relating to the applied power level curve 342 at a time of around 3:15. If the departure time or parking period is at 4:00, then the energy curve 344 would be a better charging scheme than the energy curve 342. This is however not cost efficient. Therefore, by estimating the departure time or parking period, the processing unit 103 may better determine an initial charging scheme that is more cost efficient than the energy curve 344 and ensures the EVB to be charged to a minimum target SoC, e.g. 100%, at least 90%, at least 80%, etc., that is more reliable than the energy curve 342.

Therefore, as is understood from Figs. 3a-3d, charging schemes based for example on real-time price signals may work better if there is at least a good estimate of the free battery capacity and the parking period. Moreover, the supported charging power level(s) of the EVB, which may be determined or estimated may further improve the determining of the charging scheme.

The processing unit 103 may adjust the initial charging scheme based additionally or alternatively on at least one of a group of an intraday trading market, an intraday balancing market and a reserve market activation. The processing unit 103 may estimate total power or energy demand a day in advance. If we take for instance in Germany, all power can be purchased in 15-minute blocks. For instance, on the German intraday market, power can be purchased in increments of at least 100 kW. The power can be sold intraday (within-day) up until 30 minutes before the delivery period, at which point intraday trading is stopped. Once intraday trading is stopped (e.g., 30 minutes before delivery), it is up to the grid operator to ensure that enough power is going to be produced to meet the country's demand since no one else can buy or sell power anymore. This is done via reserve/balancing markets.

The balancing market can be used to ensure grid stability. It does this by ensuring that total electricity production meets the total demand. As described above, it isn't always the case that all the purchased power or energy is used, or that the purchased power or energy covers the demand. When this happens, there is an imbalance, and the grid operator calculates an imbalance price for that delivery period. This price is normally based on the costs the grid operator incurred in balancing the grid. This imbalance price is then paid by all the participants based on the difference between what they bought/sold and what they used/produced. The goal of this price is to incentivize participants to produce/use exactly what they said they would and to encourage the mitigation of imbalances. A balancing responsible party (BRP) can generate additional income by solving imbalances caused by other BRP's. Therefore, in the example above, if the charging point facility manager purchases less energy than the present demand of power or energy, then the manager would need to use locally produced power or energy and/or purchase more energy on the balancing market. In another example, if the charging point facility manager purchases more energy than present demand of power or energy Therefore, the processing unit 103 may optimize charging scheme such that the additional power is purchased/sold at a lower/higher price on the balancing market.

The price of energy on the balancing market, for example for each 15-minute interval, may be provided every one or more seconds or minutes by the power grid system operator like Elia in Belgium. Other information provided by the power grid system operator may be net regulation volume (NRV), system imbalance (SI), marginal incremental price (MIP), marginal decremental price (MDP), strategic reserve price (SR), etc. Furthermore, power grid operators like Elia in Belgium are responsible for organizing, managing and, if necessary, activating reserve contracts to offset any incidental frequency deviation (for e.g. power plant failure, periods with fluctuating sun and wind).

The system 100 may further comprise a communications unit 109 configured to communicate information between the processing unit 103 and external units. The processing unit 103 may receive information related to the balancing market and/or the reserve market activation, via the communications unit 109, for example the information provided by the grid operator as described above. For example, the processing unit 103 may receive information relating to a purchasing or selling price of power or energy on said markets. Furthermore, the processing unit 103 may transmit a request of purchasing or selling power or energy on said balancing market and/or the reserve market activation, via the communications unit 109. For example, the processing unit 103 transmits information about excess power or energy (e.g., power or energy not used by the facility manager, the charging points, storage units, etc.) and receives information on a price of selling said excess power or energy on the balancing market.

Figs. 4a shows an overview at the end of the day of a determined production of local power (in W) in a local energy grid by a PV energy source 123 in function of time (in hours) as a shaded area 416. In this example, the produced local power 416 is measured in real-time (e.g., every one or more seconds or minutes). The measurement may be performed by the metering unit 110 and received by the processing unit 103. The processing unit 103 may determine the produced power or energy 416 by the renewable energy source 122, 123 based on said measurements.

Fig. 4a further shows an overview of the day-ahead predefined power pricing curve 414 (in Euros per MWh) in function of time (in hours) of a purchased/contracted power a day in advance. In this example, the pricing is provided in 1-hour intervals, however, the power may be purchased/contracted in quarter-hour blocks (e.g. in Germany), twenty-minute blocks, half-hour blocks, etc. Thus, the pricing of said purchased/contracted power may be provided in intervals according to the block intervals of the purchased/contracted power or energy. The processing unit 103 may determine the constraints or the initial charging scheme based further on said pricing of the power or energy, for example as described above with reference to Figs. 3b-3d.

Furthermore, Fig. 4a shows an overview at the end of the day of applied power level (in kW) by the charging point circuitry 105 to the EVB of the EV 115 in function of time (in hours) as shaded areas of curves. This example shows multiple applied power level curves 411, 412 (i.e., Session1, ..., Session n) by the charging point circuitry 105 according to a determined or adjusted charging scheme for the EVB of each of the plurality of EVs or the power measured by the charging point circuitry 105 or processing unit 103 when charging the EVB of each of the plurality of EVs according to the determined or adjusted charging scheme.

An example of the determined or adjusted charging scheme for applying power (shown in Fig. 4a) is shown in Fig. 4b. Fig. 4b shows a grey surface 420 which indicates the flexibility for transferring a requested energy (i.e. possible amount of energy transferred/charged at the indicated moment). Furthermore, the grey surface 420 shows all potential charging schemes that may be generated in between the constraints of upper 421 and lower 422 borders. In this example, information on an early transfer of accumulated energy allowed by the EVB within the determined or estimated parking duration in function of time is represented as an upper solid line 421 or a maximum energy curve 421 (i.e., uncontrolled charging or charging at maximum power level as fast as possible), where the energy at 12:00 is 175 kWh. Information on a delayed transfer of accumulated energy in function of time needed is represented by a lower solid line 422 or a minimum energy curve 422 (i.e., maximally deferred charging or delaying the start of charging as long as possible and then charge at maximum power), where the energy at 12:00 is 0 kWh and charging starts after 13:00. The solid line 423 between the upper and lower solid lines 421, 422 represents the actual or scheduled energy transferred to the EVB for charging (e.g. the determined initial charging scheme or adjusted charging scheme), where the energy at 12:00 is 120 kWh. It can be understood that a slope of the maximum and minimum energy curves 421, 422 in Fig. 4b indicates the minimum and maximum supportable power levels supported by the respective EVB.

Fig. 4b shows an overview of energy measured at the end of the day/session, for example by the charging point circuitry 105 or the processing unit 103. The measured energy may represent energy values in the respective charging scheme. In other words, Fig. 4b shows an overview at the end of the day/session of the determined or adapted charging scheme used to charge the respective EVB, as described herein. The power values of one of the applied power curves 411, 412 to charge the respective EVB, as shown in Fig. 4a, may be determined based on or according to the energy values in the charging scheme 423 of Fig. 4b. The power values may be determined for example by calculating a slope at a specific point or between two points on the charging scheme 423.

The processing unit 103 may determine or adjust the charging scheme based on the determined constraints as described herein and based further on at least one of a group of: the power or energy pricing curve 414, produced local power 416 of the PV power source 123 (and/or any other renewable energy source), and for example the total power used on the connection point to the grid.

Fig. 5 shows an overview at the end of the day of a determined production of local power (in W) in a local energy grid by a PV energy source 123 in function of time (in hours) as a shaded area 506, an overview of the day-ahead predefined power pricing curve 505 (in Euros per MWh) in function of time (in hours) of a purchased/contracted power a day in advance, and an overview at the end of the day of applied power level (in kW) by the charging point circuitry 105 to the EVB of the EV 115 in function of time (in hours) as shaded areas of curves 501, 502. (similar to Fig. 4a). In this example, the processing unit 103 determines the initial charging schemes 501, 502, such that most of the charging is done at a low-price period, particularly between 9:00-13:00.

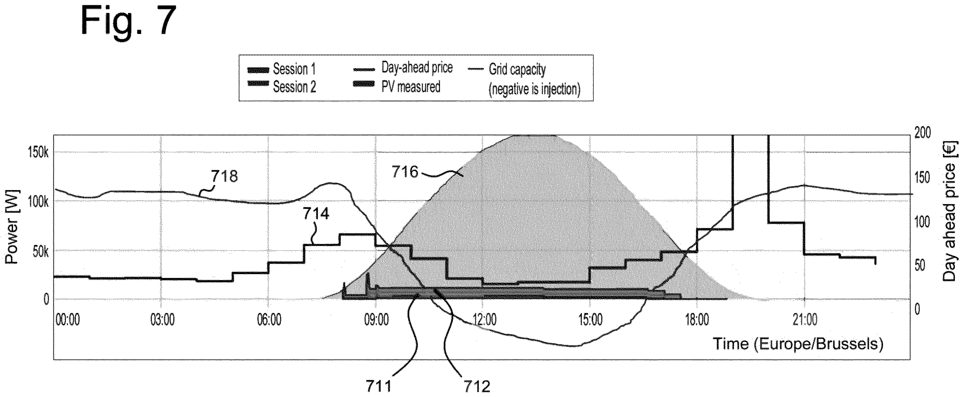

Fig. 7 shows an overview at the end of the day of a determined production of local power (in W) in a local energy grid by a PV energy source 123 in function of time (in hours) as a shaded area 716, an overview of the day-ahead predefined power pricing curve 714 (in Euros per MWh) in function of time (in hours) of a purchased/contracted power a day in advance, and an overview at the end of the day of applied power level (in kW) by the charging point circuitry 105 to the EVB of the EV 115 in function of time (in hours) as shaded areas of curves 711, 712. (similar to Fig. 5). This example, further shows the determined energy flow 718 at the power grid connection point (i.e., grid capacity). It can be seen that between around 10:30-16:30, the local power produced by the PV energy source 123 exceeds the total consumption in the local energy grid, resulting in an energy surplus that is injected into the public grid, thereby creating a negative grid load, visible as curve 718 going below 0 . Thus, the processing unit 103 determines said power flow 718 at the power grid connection point as described above, and determines the constraints and/or the charging scheme based on said energy flow. For example, the at least one EVB is charged from the local power produced by the PV energy system 123 in the local energy grid.

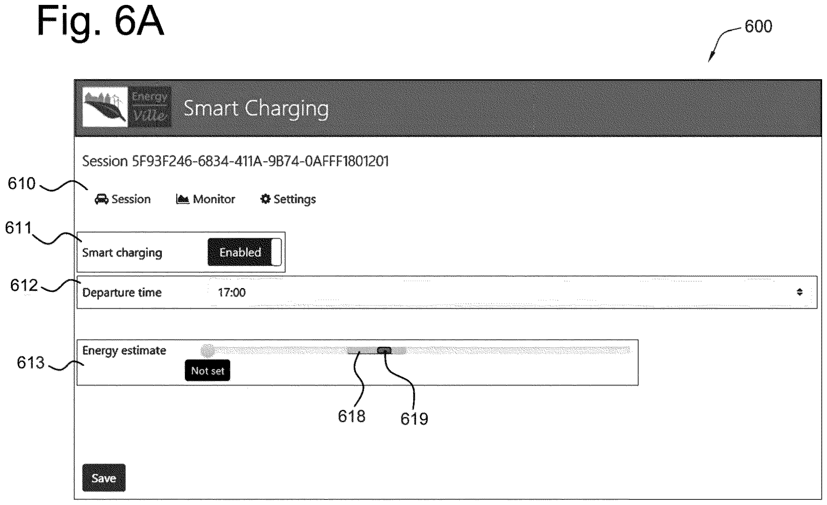

The user interface 107 provided by the method and comprised in the system 100 according to the present invention will be described with reference to Figs. 6a-6d. Fig. 6a shows the user interface 600 providing information of a present session to a user/driver, for example the user/driver selects a session tab 610 comprised in the user interface 600. The present session may be identified using a session identification (ID) or a universally unique identifier (UUID). Furthermore, the user interface 600 may provide the user with information relating to the present session, the information comprising at least one of a group of a smart charging state 611 (i.e., enabled or disabled), the determine or estimated departure time 612, and an energy estimate feature or visualisation 613. The user/driver may provide input in the form of changing or setting an estimated departure time 612 or an estimated parking duration. The user/driver may further change or set said estimated departure time 612 or parking duration as a default for future charging sessions, for example, if the user/driver has a daily work routine. The estimated departure time 612 or parking duration provided by the user can help improve the determining of the initial charging scheme and/or future charging schemes.

Additionally or alternatively, the user/driver may provide input in the form of changing or setting an energy estimate 619 or free battery capacity estimate. The user/driver may be provided with a determined or estimated energy value generated via the method step 203, which will be supplied for determining or adjusting the charging scheme in method steps 209, 213, shown as a dark grey zone 619. An example of the determined or estimated energy value 619 is a statistical analysis of charging schemes during previous sessions of charging the EVB of the user/driver's EV, for example, an average energy (median, mean, mode, etc.) or an interpolated energy. The previous sessions may be statistically analysed for a predetermined period in days, weeks, months or years, for example in the last 5 days, in the last week, in the last month, in the last quarter, in the last year, etc. The user/driver may be further provided with a range of (i.e., minimum and maximum) energy charged, from lowest to highest energy charged, shown as light grey zones 618, based on charging schemes during previous sessions of charging the EVB of the user/driver's EV. The minimum and maximum energy charged values may be based on a predetermined period in days, weeks, months or years, for example in the last 5 days, in the last week, in the last month, in the last quarter, in the last year, etc.

The user/driver may enable or disable a (smart) charging function 611 which refers to enabling/disabling the determined charging scheme for the EVB of the parked EV of the user/driver. Furthermore, any changes to the present session or future sessions can be saved, for example the user/driver input may be saved in the memory unit 104 and used by the processing unit 103 for performing at least one of the steps of determining 203 free battery capacity and parking duration, determining behavioural change of the user, determining 207 constraints and determining 209 an initial charging scheme.

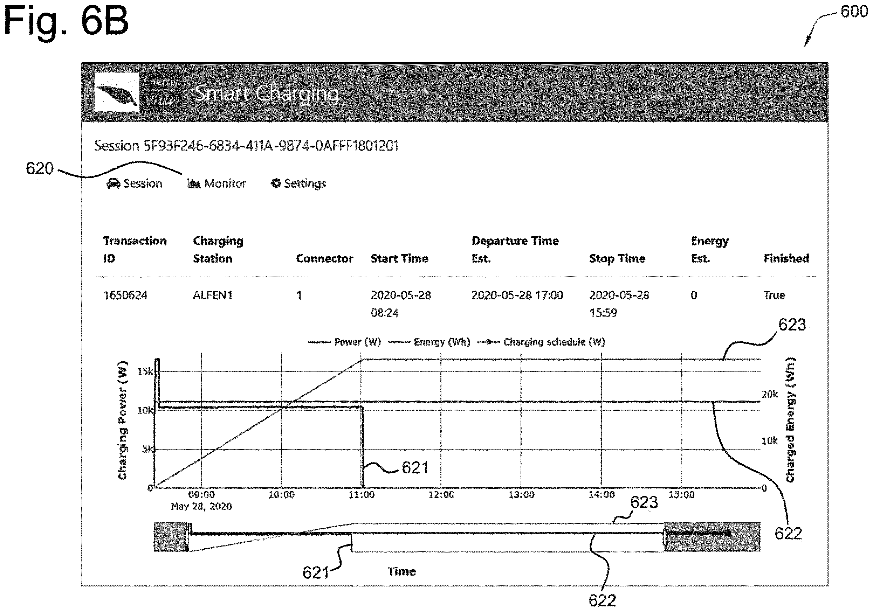

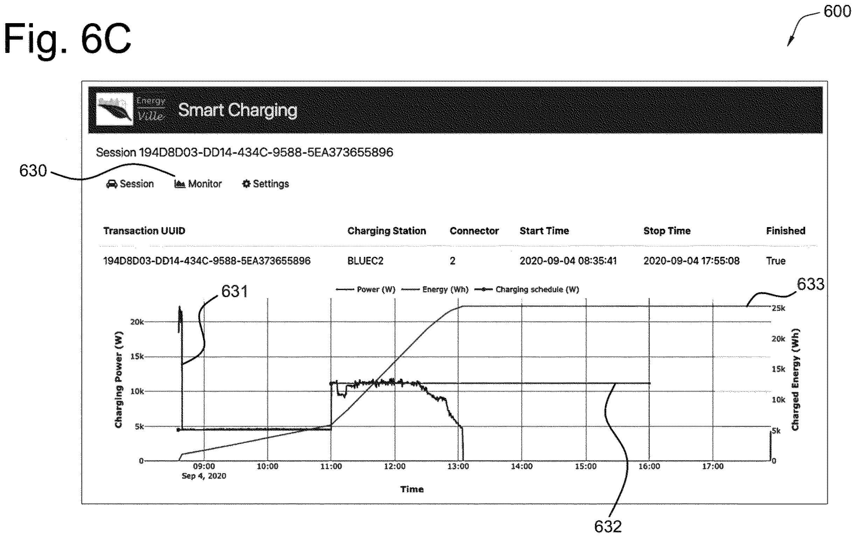

Figs. 6b and 6c show a user interface 600 providing information of charging of the EVB according to the determined respective charging scheme to the user/driver, for example, the user/driver selects a monitor tab 620, 630 comprised in the user interface 600. The information of the charging of the EVB may be related to the present session based on the session ID. Said information may be at least one of a group of a transaction ID or UUID, charging station (i.e., charging point) information (e.g., type, name, ID or UUID), a connector number (e.g. charging point circuitry), a charging starting time (e.g., start of the determined charging scheme or time of connection of parked EV to the charging point circuitry), a determined/expected or estimated departure time or parking duration, a stop time (e.g., end of the charging or charging scheme, actual departure time of the EV, disconnection from charging point circuitry, etc.), a determined/expected or estimated needed energy (e.g., determined or estimated free battery capacity), and an indication of whether the charging session is finished (e.g., whether the charging cable is connected (false) or disconnected (true)).

The user interface 600 may provide a graphical representation of a charged energy or total/cumulative charged energy (for e.g., in Watts hour, Wh) of the EVB from the start time of the session or transaction until a present time. The charged energy may be represented as an energy curve 623, 633. In embodiments, the energy curve 623, 633 may represent a determined or adapted charging scheme for the day, session or transaction. The user interface may further provide a graphical representation of a charging schedule (for e.g., in Watts, Wj based on a respective determined or adapted charging scheme from the start time of the session or transaction until the determined or estimated departure time or for the determined or estimated parking duration. Said charging schedule may be represented as a scheduled charging power curve 622, 632, which may be dependent on the supportable power levels of the EVB.

The user interface 600 may provide a graphical representation of applied power levels (for e.g., in Watts, Wj for charging the EVB from the start time of the session or transaction until a present time. The applied power levels may be represented as an applied power level curve 621, 631. The applied power levels or the applied power level curve 621, 631 may be determined based on measurements by the charging point circuitry.

In an embodiment, the user interface 107 may be further configured to receive user input relating to at least one supported power level for charging the EVB.

As shown in Fig. 6b, the charging point circuitry initially allows a maximum power level of around 16 kW and reduces this after a short period to 11 kW for charging the EVB, and the inverter of the EVB or EV lowers said maximum power level to a supportable maximum power level equal to or less than around 11 kW. In this example, the charging energy reached the total battery capacity of the EVB (i.e., free battery capacity is 0 Wh) at around 11:00 and the power level is reduced or set to 0 W.

Furthermore, Fig. 6b shows the graphical representation of the applied power level curve 621, the scheduled charging power curve 622 and the charged energy 623 for a completed session or transaction (e.g., until the stop time of the charging). The user/driver may adjust the representation by for example, changing/selecting a period within the start and stop time or within the start and determined or estimated departure time, zoom in/out, filter out at least one of the power curve, charging scheme and energy curve, etc.

Fig. 6c shows a graphical representation of the applied power level curve 631, the scheduled charging power curve 632 and the charged energy 633 for a completed session or transaction (e.g., until the stop time of the charging). In this example, the end time of charging session is the actual disconnection of the EV (e.g., disconnection of the charging cable related to departure of the EV) is at around 17:55. The stop time may be a parking duration or departure time determined or estimated by the processing unit 103 as long as the charging session is not finished. Furthermore, the determined or estimated departure time may be preferably the same as the stop time or before/after the stop time (e.g., the charging scheme may have safety margins as described herein). The charging schedule curve 632, determined based on the relevant charging scheme 633 for the EVB, comprises a plurality of power levels, such as around 5 kW between 8:35 and 11:00 and around 11 kW between 11:00 and 16:00. From Fig. 6c, it can be seen that a two power levels are applied by the charging point circuitry, as shown by the applied power level curve 632. The EVB circuitry applied a plurality of power levels 631 as measured by the charging point circuitry. In general, a power level is measured and summed to an energy curve 633. The applied power level may vary, as shown between around 11:00-13:05, due to several factors, for example, cell balancing by the electric vehicle battery management system.

There may be one or more transactions for each session. For example, if the user/driver provides input as described above, which would change the determined or estimated departure time or parking duration. Another example, would be if the user/driver changes connector or charging station.

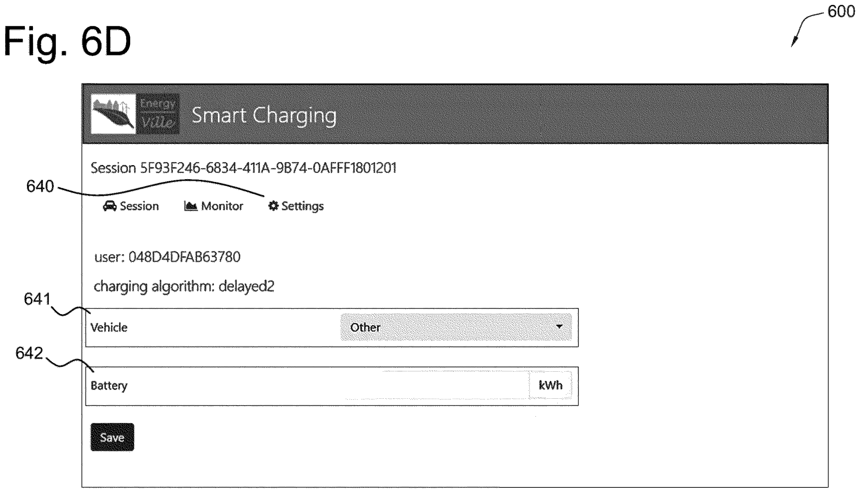

Fig. 6d shows a user interface 600 providing information of settings to the user/driver, for example, the user/driver selects a settings tab 640 comprised in the user interface 600. The information of the charging of the EVB may be related to the present session based on the session ID. Said information may be at least one of a group of a user identification (e.g., ID, UUID or user contact info, such as email, telephone number, etc.), a type of determined charging scheme or a determined charging scheme ID or UUID, an EV specification 641 and an EVB specification 642. The user/driver may provide input in the form changing or setting the EVB specification 642, for example any one or combination of battery capacity, battery type, battery model, whether three phase charging is supportable by the EVB, a maximum supportable power level (in W or kW) of the EVB and a maximum capacity of the EVB (in kWh). Alternatively or additionally, the user/driver may provide input in the form changing or setting the EV specification 641, for example vehicle type (PHEV, BEV, etc.) or vehicle model (e.g., Tesla Model 3 Standard Range, Tesla Model 3 Standard Range Plus, Tesla Model 3 Long Range, Kia Optima PHEV, Nissan Leaf, etc.). It may be already known from the EV specification 641, particularly the vehicle type/model at least one of the following: whether three phase charging is supportable by the EVB, the maximum supportable power level of the EVB and the maximum capacity of the EVB. However, the user/driver may still change or set these values to be more representative of the EV of the user/driver.

In embodiments, the processing unit 103 may receive any one or combination of user inputs described above. Therefore, the processing unit 103 may adjust the initial charging scheme based additionally or alternatively on said received user input(s).

The processing unit 103 may be further configured to perform the step of determining a behavioural change of the user/driver of one of the at least one EV, wherein the determining of the initial charging scheme for the EVB related to said one of the at least one EV 115 may be further based on the determined behavioural change. Alternatively, the determining of the constraints may be further based on the determined behavioural change. The behavioural change may be determined by comparing present data with the historical data.

The present data may comprise charging point circuitry data relating to the use or operation of the charging point circuitry for charging the EVB at the present moment. The processing unit 103 may receive said present charging point circuitry data from the charging point circuitry 105 to which the user/driver's EV 105 is electrically connected. In one example, when the user/driver arrives later than usual (i.e., in comparison to historical data), the processing unit 103 may determine the constraints based on an estimated longer departure time or increased free battery capacity. In a similar example, the processing unit 103 may determine the initial charging scheme having safety margins, for example in the case where the user/driver arrives late and decides to leave earlier than usual.

The present data may further comprise present weather data. The processing unit 103 may receive said present weather data from an external unit, such as a weather database. In another example, when the weather up to the point of electrically connecting the EV is colder/warmerthan usual, then the processing unit 103 may determine the constraints based on a determined or estimated increased free capacity (e.g. due to the use of heating/cooling by the user/driver in the EV).

Additionally or alternatively, the behavioural change may be determined based on the received user input, as described above and for example with reference to Figs. 6a and 6d. Any input from the user/driver may be compared to historical data, such as historical user/driver inputs. For example, if the user/driver input is different than any previous input of the user/driver recorded, such as in the historical data in the memory 104, then the processing unit 103 may determine or adapt the initial charging scheme. An example of a user/driver input relates to a change of EV model ortype (e.g. user buys a new EV). Thus, the processing unit 103 determines the constraints and/or the initial charging scheme for example based on the same determined or estimated parking duration and a free battery capacity (based on the new EV).

In embodiments, a non-transient computer readable medium containing a computer executable software which when executed on a computer system performs the method as defined herein before by the embodiments of the present invention. A non-transient computer readable medium may include an electrical connection having one or more wires, a portable computer diskette, a hard disk, a random access memory (RAM), a read-only memory (ROM), an erasable programmable read-only memory (EPROM or flash memory), a portable compact disc read-only memory (CD-ROM), an optical storage device, a magnetic storage device, or any suitable combination of the foregoing. In the context of this document, a non-transient computer readable medium may be any tangible medium that can contain, or store a program for use by or in connection with an instruction execution system, apparatus, device or module.

### List of reference signs

- 100.: System
- 103.: Processing unit
- 104.: Memory unit
- 105.: Charging point circuitry
- 107, 600.: User interface
- 109.: Communication unit
- 110.: Metering unit
- 115.: At least one EV
- 121.: Public Power grid
- 122.: Wind-turbine energy source
- 123.: Photovoltaic energy source
- 201.: Determining first flexibility information
- 203.: Determining second flexibility information
- 204.: Estimating energy flow
- 205.: Estimating local power production
- 207.: Determining constraints
- 209.: Determining charging scheme
- 211.: Charging EVB
- 212.: Determining energy flow
- 213.: Adjusting charging scheme
- 311, 313, 321, 323, 331, 333, 341,: 343, 411, 412, 501, 502, 711, 712. Applied power
- 312, 314, 322, 324, 332, 334,: 342, 344, 421, 422, 423, 623, 633. Energy curve
- 414, 505, 714.: Power or energy pricing curve
- 416, 506, 716.: Power locally produced by PV source
- 420.: Flexibility information
- 610.: Session tab
- 611.: Smart charging status
- 612.: Departure time
- 613.: Energy estimate visualisation
- 618.: Range from lowest to highest energy charged in recent period
- 619.: Estimated energy value
- 620, 630.: Monitor tab
- 621, 631: Measured power level at charging point circuitry to EVB
- 622, 632.: Scheduled charging power curve
- 640.: Settings tab
- 641.: Vehicle specifications
- 642.: Battery specifications
- 718.: Power flow at power grid connection point

## Claims

1. A method for managing distribution of energy flow to at least one charging point to charge an electric-vehicle battery, EVB, of at least one parked electric vehicle, EV, electrically connected to a respective charging point circuitry in the at least one charging point, the method comprising the steps of:
- determining (201) a first set of flexibility information of the EVB, the first set of flexibility information comprising information on supported power levels for charging the EVB, based on historical charging point data and/or power levels communicated between the EVB and the respective charging point circuitry;
- determining (203) a second set of flexibility information of the EVB, the second set of flexibility information comprising an initial free battery capacity of the EVB and an expected parking duration of the at least one EV, based on the historical charging point data of the EVB;
- determining a behavioural change of a user of one of the at least one EV;
- determining (207) constraints related to charging the EVB using the respective charging point circuitry based on the determined first and second sets of flexibility information and the determined behavioural change of the user;
- determining (209) an initial charging scheme for the EVB of each of the at least one parked EV based on the determined constraints; and
- controlling (211) the respective charging point circuitry to charge the EVB according to the determined initial charging scheme
**CHARACTERIZED IN THAT**
said determining of the behavioural change comprises determining a probability of deviation on at least one of the expected parking duration, the initial free battery capacity and a minimal required energy to meet user expectations.

2. The method according to claim 1, wherein the constraints comprise information on an early transfer of accumulated energy in function of time needed and a delayed transfer of accumulated energy supported by the EVB within the estimated parking duration in function of time.

3. The method according to claim 1 or claim 2, wherein the step of determining of the behavioural change comprises comparing present data with historical data.

4. The method according to any preceding claim, wherein the step of determining of the behavioural change comprises receiving user input.

5. The method according to any preceding claim, further comprising the step of:
- estimating (204) energy flow at a power grid connection point located between a public power grid and a local energy grid to which the charging point circuitry is electrically connected, based on historical energy flow data measured at the power grid connection point,
wherein the step of determining (207) constraints is further based on the estimated energy flow at the power grid connection point.

6. The method according to any preceding claim, further comprising the steps of:
- determining (212) energy flow at the power grid connection point located between the public power grid and the local energy grid to which the charging point circuitry is electrically connected; and
- adjusting (213) the initial charging scheme based on the determined energy flow at the power grid connection point.

7. The method according to claim 5 or claim 6, wherein the step of estimating (204) or the step of determining (212) comprise:
- estimating an expected production of local power by a renewable energy source electrically connected to the local energy grid to which the charging point circuitry is electrically connected based on weather forecast data.

8. The method according to any preceding claim, wherein the step of determining (209) is further based on a predefined power and energy pricing.

9. The method according to any preceding claim, comprising the step of:
- adjusting (213) the initial charging scheme based on an intraday balancing market and/or a reserve market activation.

10. The method according to claim 9, further comprising the step of:
- estimating a behaviour of the intraday balancing market and/or the reserve market activation based on the predefined power pricing and historical imbalance data in the intraday balancing market and/or the reserve market activations.

11. The method according to any preceding claim, further comprising the step of:
- providing a user interface for receiving user input relating to at least one of a group of an expected departure time, a charging energy estimate, a vehicle model, and an EVB capacity.

12. The method according to claim 11, further comprising the step of:
- adjusting (213) the initial charging scheme based on the received user input.

13. A system for managing distribution of energy flow to at least one charging point to charge an electric-vehicle battery, EVB, of at least one parked electric vehicle, EV, the system (100) comprising:
at least one charging point each comprising a charging point circuitry (105) for charging the EVB of at least one parked EV (115) electrically connected to the at least one respective charging point circuitry; and
a processing unit (103) configured to perform the method of any one of claims 1-12.

14. The system according to claim 13, further comprising:
a user interface (107) for receiving user input relating to at least one of a group of an estimated departure time, an energy estimate, a vehicle model, and an EVB capacity.

15. A non-transient computer readable medium containing program instructions for causing a computer to perform the method of any one of claims 1-12.

## Patentansprüche

1. Verfahren zum Verwalten der Verteilung des Energieflusses zu mindestens einem Ladepunkt, um eine Elektrofahrzeugbatterie, EVB, von mindestens einem geparkten Elektrofahrzeug, EV, zu laden, das mit einer jeweiligen Ladepunktschaltung in dem mindestens einen Ladepunkt elektrisch verbunden ist, wobei das Verfahren die folgenden Schritte umfasst:
- Bestimmen (201) eines ersten Satzes von Flexibilitätsinformationen der EVB, wobei der erste Satz von Flexibilitätsinformationen Informationen über unterstützte Leistungsstufen zum Laden der EVB umfasst, basierend auf historischen Ladepunktdaten und/oder Leistungsstufen, die zwischen der EVB und der jeweiligen Ladepunktschaltung übermittelt werden;
- Bestimmen (203) eines zweiten Satzes von Flexibilitätsinformationen der EVB, wobei der zweite Satz von Flexibilitätsinformationen eine anfängliche freie Batteriekapazität der EVB und eine erwartete Parkdauer des mindestens einen EV umfasst, basierend auf den historischen Ladepunktdaten der EVB;
- Bestimmen einer Verhaltensänderung eines Benutzers eines des mindestens einen EV;
- Bestimmen (207) von Einschränkungen in Bezug auf das Laden der EVB unter Verwendung der jeweiligen Ladepunktschaltung basierend auf dem bestimmten ersten und zweiten Satz von Flexibilitätsinformationen und der bestimmten Verhaltensänderung des Benutzers;
- Bestimmen (209) eines anfänglichen Ladeschemas für die EVB jedes des mindestens einen geparkten EV basierend auf den bestimmten Einschränkungen; und
- Steuern (211) der jeweiligen Ladepunktschaltung, um die EVB gemäß dem bestimmten anfänglichen Ladeschema zu laden
**GEKENNZEICHNET DADURCH, DASS**
das besagte Bestimmen der Verhaltensänderung das Bestimmen einer Abweichungswahrscheinlichkeit von der erwarteten Parkdauer, der anfänglichen freien Batteriekapazität und/oder einer minimal erforderlichen Energie zum Erfüllen der Benutzererwartungen umfasst.

2. Verfahren nach Anspruch 1, wobei die Einschränkungen Informationen über einen frühzeitigen Transfer angesammelter Energie in Abhängigkeit von der benötigten Zeit und einen verzögerten Transfer angesammelter Energie, die durch die EVB unterstützt wird, innerhalb der geschätzten Parkdauer in Abhängigkeit von der Zeit umfassen.

3. Verfahren nach Anspruch 1 oder Anspruch 2, wobei der Schritt des Bestimmens der Verhaltensänderung das Vergleichen vorliegender Daten mit historischen Daten umfasst.

4. Verfahren nach einem der vorhergehenden Ansprüche, wobei der Schritt des Bestimmens der Verhaltensänderung das Empfangen einer Benutzereingabe umfasst.

5. Verfahren nach einem der vorhergehenden Ansprüche, das ferner den folgenden Schritt umfasst:
- Schätzen (204) des Energieflusses an einem Stromnetzanschlusspunkt, der sich zwischen einem öffentlichen Stromnetz und einem lokalen Energienetz befindet, an das die Ladepunktschaltung elektrisch angeschlossen ist, basierend auf historischen Energieflussdaten, die an dem Stromnetzanschlusspunkt gemessen werden,
wobei der Schritt des Bestimmens (207) von Einschränkungen ferner auf dem geschätzten Energiefluss an dem Stromnetzanschlusspunkt basiert.

6. Verfahren nach einem der vorhergehenden Ansprüche, das ferner die folgenden Schritte umfasst:
- Bestimmen (212) des Energieflusses an dem Stromnetzanschlusspunkt, der sich zwischen dem öffentlichen Stromnetz und dem lokalen Energienetz befindet, an das die Ladepunktschaltung elektrisch angeschlossen ist; und
- Einstellen (213) des anfänglichen Ladeschemas basierend auf dem bestimmtem Energiefluss an dem Stromnetzanschlusspunkt.

7. Verfahren nach Anspruch 5 oder Anspruch 6, wobei der Schritt des Schätzens (204) oder der Schritt des Bestimmens (212) Folgendes umfasst:
- Schätzen einer erwarteten Produktion lokalen Stroms durch eine erneuerbare Energiequelle, die an das lokale Energienetz elektrisch angeschlossen ist, an das die Ladepunktschaltung elektrisch angeschlossen ist, basierend auf Wettervorhersagedaten.

8. Verfahren nach einem der vorhergehenden Ansprüche, wobei der Schritt des Bestimmens (209) ferner auf einer vordefinierten Strom- und Energiepreisgestaltung basiert.

9. Verfahren nach einem der vorhergehenden Ansprüche, das den folgenden Schritt umfasst:
- Einstellen (213) des anfänglichen Ladeschemas basierend auf einer Aktivierung des Intraday-Ausgleichsmarkts und/oder des Reservemarkts.

10. Verfahren nach Anspruch 9, das ferner den folgenden Schritt umfasst:
- Schätzen eines Verhaltens der Aktivierung des Intraday-Ausgleichsmarkts und/oder des Reservemarkts basierend auf den vordefinierten Strompreisen und historischen Ungleichgewichtsdaten bei der Aktivierung des Intraday-Ausgleichsmarkts und/oder des Reservemarkts.

11. Verfahren nach einem der vorhergehenden Ansprüche, das ferner den folgenden Schritt umfasst:
- Bereitstellen einer Benutzeroberfläche zum Empfangen einer Benutzereingabe in Bezug auf eine Gruppe aus einer erwarteten Abfahrtszeit, einer Ladeenergieschätzung, einem Fahrzeugmodell und/oder einer EVB-Kapazität.

12. Verfahren nach Anspruch 11, das ferner den folgenden Schritt umfasst:
- Einstellen (213) des anfänglichen Ladeschemas basierend auf der empfangenen Benutzereingabe.

13. System zum Verwalten der Verteilung des Energieflusses zu mindestens einem Ladepunkt, um eine Elektrofahrzeugbatterie, EVB, von mindestens einem geparkten Elektrofahrzeug, EV, zu laden, wobei das System (100) Folgendes umfasst:
mindestens einen Ladepunkt, der jeweils eine Ladepunktschaltung (105) zum Laden der EVB von mindestens einem geparkten EV (115) umfasst, das mit der mindestens einen jeweiligen Ladepunktschaltung elektrisch verbunden ist; und
eine Verarbeitungseinheit (103), die so konfiguriert ist, dass sie das Verfahren nach einem der Ansprüche 1-12 ausführt.

14. System nach Anspruch 13, das ferner Folgendes umfasst:
eine Benutzeroberfläche (107) zum Empfangen einer Benutzereingabe in Bezug auf eine Gruppe aus einer geschätzten Abfahrtszeit, einer Energieschätzung, einem Fahrzeugmodell und/oder einer EVB-Kapazität.

15. Nicht flüchtiges computerlesbares Medium, das Programmanweisungen enthält, um einen Computer zu veranlassen, das Verfahren nach einem der Ansprüche 1-12 auszuführen.

## Revendications

1. Procédé de gestion de distribution de flux d'énergie à au moins une borne de recharge pour recharger une batterie de véhicule électrique, EVB, d'au moins un véhicule électrique, EV, stationné connecté électriquement à un circuit de borne de recharge respectif dans l'au moins une borne de recharge, le procédé comprenant les étapes suivantes :
- déterminer (201) un premier ensemble d'informations de flexibilité de l'EVB, le premier ensemble d'informations de flexibilité comprenant des informations sur des niveaux de puissance pris en charge pour recharger l'EVB, sur la base de données historiques de borne de recharge et/ou de niveaux de puissance communiqués entre l'EVB et le circuit de borne de recharge respectif;
- déterminer (203) un deuxième ensemble d'informations de flexibilité de l'EVB, le deuxième ensemble d'informations de flexibilité comprenant une capacité initiale de batterie disponible de l'EVB et une durée de stationnement prévue de l'au moins un EV, sur la base des données historiques de borne de recharge de l'EVB ;
- déterminer un changement de comportement d'un utilisateur de l'un des au moins un EV ;
- déterminer (207) des contraintes liées à la recharge de l'EVB en utilisant le circuit de borne de recharge respectif sur la base des premier et deuxième ensembles déterminés d'informations de flexibilité et du changement de comportement déterminé de l'utilisateur ;
- déterminer (209) un schéma de recharge initial pour l'EVB de chacun de l'au moins un véhicule électrique stationné sur la base des contraintes déterminées ; et
- commander (211) au circuit de borne de recharge respectif pour recharger l'EVB selon le schéma de recharge initial déterminé
**CARACTÉRISÉ EN CE QUE**
ladite détermination du changement de comportement comprend la détermination d'une probabilité d'écart sur au moins l'un parmi la durée de stationnement prévue, la capacité initiale de batterie disponible et une énergie minimale requise pour répondre aux attentes de l'utilisateur.

2. Procédé selon la revendication 1, où les contraintes comprennent des informations sur un transfert anticipé d'énergie accumulée en fonction du temps nécessaire et un transfert retardé d'énergie accumulée pris en charge par l'EVB dans la durée de stationnement estimée en fonction du temps.

3. Procédé selon la revendication 1 ou la revendication 2, où l'étape de détermination du changement de comportement comprend la comparaison de données actuelles avec des données historiques.

4. Procédé selon l'une quelconque des revendications précédentes, où l'étape de détermination du changement de comportement comprend la réception d'entrée d'utilisateur.

5. Procédé selon l'une quelconque des revendications précédentes, comprenant en outre l'étape suivante :
- estimer (204) le flux d'énergie à un point de connexion au réseau électrique situé entre un réseau électrique public et un réseau énergétique local auquel le circuit de borne de recharge est connecté électriquement, sur la base de données historiques de flux d'énergie mesurées au point de connexion au réseau électrique,
où l'étape de détermination (207) de contraintes est en outre basée sur le flux d'énergie estimé au point de connexion au réseau électrique.

6. Procédé selon l'une quelconque des revendications précédentes, comprenant en outre les étapes suivantes :
- déterminer (212) le flux d'énergie au point de connexion au réseau électrique situé entre le réseau électrique public et le réseau énergétique local auquel le circuit de borne de recharge est électriquement connecté ; et
- ajuster (213) le schéma de recharge initial sur la base du flux d'énergie déterminé au point de connexion au réseau électrique.

7. Procédé selon la revendication 5 ou la revendication 6, où l'étape d'estimation (204) ou l'étape de détermination (212) comprennent :
- estimer une production prévue de puissance locale par une source d'énergie renouvelable connectée électriquement au réseau énergétique local auquel le circuit de borne de recharge est connecté électriquement sur la base de données de prévisions météorologiques.

8. Procédé selon l'une quelconque des revendications précédentes, où l'étape de détermination (209) est en outre basée sur une tarification prédéfinie de puissance et d'énergie.

9. Procédé selon l'une quelconque des revendications précédentes, comprenant l'étape suivante :
- ajuster (213) le schéma de recharge initial sur la base d'un marché d'équilibrage intra-journalier et/ou d'une activation du marché de réserve.

10. Procédé selon la revendication 9, comprenant en outre l'étape suivante :
- estimer un comportement du marché d'équilibrage intra-journalier et/ou de l'activation du marché de réserve sur la base de données prédéfinies de tarification de puissance et de données historiques de déséquilibre sur le marché d'équilibrage intra-journalier et/ou des activations du marché de réserve.

11. Procédé selon l'une quelconque des revendications précédentes, comprenant en outre l'étape suivante :
- fournir une interface utilisateur pour recevoir une entrée d'utilisateur relative à au moins un parmi un groupe d'une heure de départ prévue, une estimation d'énergie de recharge, un modèle de véhicule et/ou une capacité de l'EVB.

12. Procédé selon la revendication 11, comprenant en outre l'étape suivante :
- ajuster (213) le schéma de recharge initial sur la base de l'entrée d'utilisateur reçue.

13. Système de gestion de distribution de flux d'énergie à au moins une borne de recharge pour recharger une batterie de véhicule électrique, EVB, d'au moins un véhicule électrique, EV, stationné, le système (100) comprenant :
au moins une borne de recharge comprenant chacune un circuit de borne de recharge (105) pour recharger l'EVB d'au moins un EV stationné (115) connecté électriquement à l'au moins un circuit de borne de recharge respectif ; et
une unité de traitement (103) configurée pour exécuter le procédé selon l'une quelconque des revendications 1 à 12.

14. Système selon la revendication 13, comprenant en outre :
une interface utilisateur (107) pour recevoir une entrée d'utilisateur relative à au moins un parmi un groupe d'une heure de départ estimée, une estimation d'énergie, un modèle de véhicule et une capacité EVB.

15. Support lisible par ordinateur non transitoire contenant des instructions de programme pour amener un ordinateur à exécuter le procédé selon l'une quelconque des revendications 1 à 12.
